# EUROPEAN PATENT APPLICATION

(11) **EP 4 624 034 A1**
(43) Date of publication of application: **01.10.2025**
(21) Application number: 25160642.2
(22) Date of filing: 27.02.2025
(51) Int. Cl.: B01J 4/00, B01J 8/18, B01J 8/44, C08F 2/01, C08F 2/34

(54) **FLUIDIZED BED POLYMERIZATION REACTOR**

(30) Priority: 25.03.2024 KR 20240040510
(71) Applicant: DL Chemical Co., Ltd., Seoul 03181 (KR)
(72) Inventor: Seo, Hyung Jae, Daejeon (KR); Kang, Sung Woo, Daejeon (KR); Chun, Byung Soon, Daejeon (KR); Choi, Jang Ryeok, Daejeon (KR)
(74) Representative: Dr. Schön, Neymeyr & Partner Patentanwälte mbB

(57) **Abstract**

Proposed is a fluidized bed polymerization reactor, including a plenum located in a lower part of the fluidized bed polymerization reactor, a distribution plate located inside the plenum and having a hollow center, a discharge pipe discharging polymer particles, as connected to the hollow center of the dispersion plate and having a hollow cylindrical structure, and an inlet nozzle located on the outer surface of the plenum. The fluidized bed polymerization reactor is characterized in that an acute angle (θ) between a long axis of the inlet nozzle and a tangent of the plenum at an intersection with the long axis of the inlet nozzle is less than 90°, and a distance (d) between a lowermost end of the dispersion plate and an uppermost end of the inlet nozzle is 100 mm or more.

## Description

### CROSS REFERENCE TO RELATED APPLICATION

The present application claims priority to Korean Patent Application No. 10-2024-0040510, filed March 25, 2024, the entire contents of which is incorporated herein for all purposes by this reference.

### BACKGROUND OF THE DISCLOSURE

### 1. Field of the Disclosure

The present disclosure relates to a fluidized bed polymerization reactor.

### 2. Description of the Related Art

Industrially, known methods for preparing polyolefin from olefin are a solution polymerization process, a slurry polymerization process, and a gas phase polymerization process. The solution polymerization process refers to a process where polymerization occurs while polymer particles are molten in a liquid phase. The slurry polymerization process refers to a process where polymer particles produced in a liquid polymerization medium are in a solid state. The gas phase polymerization process refers to a process where polymer particles produced in a gaseous polymerization medium are dispersed in a fluidized state. Generally, the gas phase polymerization process involves a polymerization reaction using a fluidized bed polymerization reactor.

In a conventional fluidized bed polymerization reactor, circulating gas flows into a reactor through a circulating gas inlet and a gas distribution plate, comes into contact with polyolefin particles within the reactor, undergoes a polymerization reaction, and is discharged through an outlet. A catalyst or prepolymer is introduced into the reactor through a catalyst or prepolymer inlet. The fluidized bed polymerization reactor has excellent heat transfer properties compared to other types of polymerization reactors, as well as the fluidized bed polymerization reactor has a uniform temperature distribution within the reactor. These properties allow a material composition within the reactor to be constant. In addition, the residence time of a solid reactant in the reactor is not only long, but the solid reactant also moves like a fluid. That makes solid processing easy. Furthermore, there is also the advantage that reactor operation and reactor design are easy due to the simplification of the structure of the reactor.

However, it is difficult to increase the frequency and time of contact between the catalyst and the reactants due to the properties of a fluidized bed. As a result, the production amount per unit volume of the reactor is limited. To address this issue, U.S. Patent No. 5,834,571 and U.S. Patent No. 5,436,304 disclose a method of increasing a production amount by adding condensation-inducing substances to circulating gas and a method of directly injecting a liquid into a bubble fluidized bed. However, these techniques of increasing a production amount by changing a composition of the circulating gas cause a drastic change in reaction conditions. Additionally, these techniques incur additional investment costs such as an installation of a pump depending on an input of condensation-causing substances and an installation of condensate storage.

### [Related Art Documents]

### [Patent Documents]

(Patent Document 1) US Patent No. 5,834,571 (November 10, 1988)
(Patent Document 2) US Patent No. 5,436,304 (July 25, 1995)

### SUMMARY OF THE DISCLOSURE

A purpose of the present disclosure is to provide a fluidized bed polymerization reactor that enables an increased production rate, reduced maintenance and operating costs, an ability to switch between High Sorption Mode and Non-Sorption Mode, and obtainment of process stability in a range of 0% to 5% sorption amount in a circulating fluid.

However, the purpose is illustrative, and the technical idea of the present disclosure is not limited thereto.

One aspect of the present disclosure provides a fluidized bed polymerization reactor, including: a plenum located in a lower part of a fluidized bed polymerization reactor; a distribution plate located inside the plenum and having a hollow center; a discharge pipe discharging polymer particles, as connected to the hollow center of the dispersion plate and having a hollow cylindrical structure; and an inlet nozzle located on the outer surface of the plenum. The fluidized bed polymerization reactor is characterized in that an acute angle (θ) between a long axis of the inlet nozzle and a tangent of the plenum at an intersection with the long axis of the inlet nozzle is less than 90°, and a distance (d) between a lowermost end of the dispersion plate and an uppermost end of the inlet nozzle is 100 mm or more.

In the aspect, the fluidized bed polymerization reactor may have a D_{N}/D_{P} ratio in a range of 0.1 to 0.3, where the D_{N}/D_{P} ratio means a ratio of an inner diameter D_{N} (mm) of the inlet nozzle to an inner diameter D_{P} (mm) of an upper part of the plenum.

In the aspect, the fluidized bed polymerization reactor may have a D_{A}/D_{B} ratio in a range of 0.8 to 1.2, where the D_{A}/D_{B} ratio means a ratio of a distance D_{A} (mm) from a lowermost end of the plenum to a long axis of the inlet nozzle to a distance D_{B} (mm) from an uppermost end of the dispersion plate to the long axis of the inlet nozzle.

In the aspect, the fluidized bed polymerization reactor may have a D_{A}/D_{P} ratio in a range of 0.1 to 0.3, where the D_{A}/D_{P} ratio means a ratio of a distance D_{A} (mm) from a lowermost end of the plenum to the long axis of the inlet nozzle to an inner diameter D_{P} (mm) of an upper part of the plenum.

In the aspect, the dispersion plate may have a porous structure provided with a plurality of through holes.

In the aspect, the dispersion plate may have an inclination of 10° or more based on a horizontal axis of the plenum.

In the aspect, the plenum may have a D_{H}/D_{P} ratio in a range of 0.4 to 0.6, where the D_{H}/D_{P} ratio means a ratio of a height D_{H} (mm) of the plenum to an inner diameter D_{P} (mm) of an upper part of the plenum.

In the aspect, the acute angle (θ) may be 70° or less.

In a fluidized bed polymerization reactor according to the present disclosure, an inlet nozzle located on an outer surface of a plenum forms an acute angle (θ) of less than 90° with respect to a tangent of the plenum at an intersection with the long axis of the inlet nozzle, and is arranged so that a distance (d) between a lowermost end of a distribution plate and an uppermost end of the inlet nozzle is 100 mm or more. Thereby, the fluidized bed polymerization reactor can effectively cause a vortex phenomenon when a fluid is introduced. Through this, residual catalyst or fine polymer solid particles remaining on the wall are removed using a washing phenomenon of a rapidly swirling sorption liquid. Therefore, the problem of shutting down a process when a sorption amount is 1% to 5% can be prevented. This improves process and operation stability. In addition, the advantages can increase a polymerization production rate, lower the maintenance and operating costs of the reactor, and allow the reactor to be able to switch between High Sorption Mode and Non-Sorption Mode in the reactor.

### BRIEF DESCRIPTION OF THE DRAWINGS

Figure 1 shows a side view of a fluidized bed polymerization reactor according to an example of the present disclosure;
Figure 2 shows a top view showing a long axis of an inlet nozzle according to another example of the present disclosure and an acute angle between the long axis of the inlet nozzle and a tangent of a plenum at an intersection with the long axis of the inlet nozzle; and
Figure 3 shows a top view of a dispersion plate according to a further example of the present disclosure.

### DESCRIPTION OF THE PREFERRED EMBODIMENTS

Advantages and features of the embodiments of the present disclosure and methods for achieving them will become clear by referring to the embodiments described in detail below along with the accompanying drawings. However, the present disclosure is not limited to the embodiments disclosed below, but may be implemented in various different forms. These embodiments are merely provided to ensure that the disclosure of the present disclosure is complete and to fully inform those skilled in the art of the scope of the present disclosure. The present disclosure is defined only by the scope of the claims. Like reference numerals refer to like elements throughout the specification.

In describing embodiments of the present disclosure, when it is determined that a detailed description of a known function or configuration may unnecessarily obscure the gist of the present disclosure, the detailed description will be omitted. The terms described below are defined in consideration of functions in the embodiments of the present disclosure and may vary depending on the intention or custom of the user or operator. Therefore, the definition should be made based on the contents throughout this specification.

One aspect of the present disclosure provides a fluidized bed polymerization reactor 100, including: a plenum 10 located in a lower part of the fluidized bed polymerization reactor; a distribution plate 20 located inside the plenum and having a hollow center; a discharge pipe 21 discharging polymer particles, as connected to the hollow center of the dispersion plate and having a hollow cylindrical structure; and an inlet nozzle 30 located on an outer surface of the plenum. The fluidized bed polymerization reactor is characterized in that an acute angle (θ) between a long axis of the inlet nozzle and a tangent of the plenum at an intersection with the long axis of the inlet nozzle is less than 90°, and a distance (d) between a lowermost end of the dispersion plate and an uppermost end of the inlet nozzle is 100 mm or more.

In this way, in the fluidized bed polymerization reactor according to one embodiment of the present disclosure, the inlet nozzle 30 located on the outer surface of the plenum 10 forms an acute angle (θ) of less than 90° with respect to the tangent of the plenum 10 at an intersection with the long axis of the inlet nozzle, and is arranged so that a distance (d) between a lowermost end of the distribution plate 20 and an uppermost end of the inlet nozzle is 100 mm or more. Thereby, the fluidized bed polymerization reactor can effectively cause a vortex phenomenon when a fluid is introduced. Through this, residual catalyst or fine polymer solid particles remaining on the wall are removed using a washing phenomenon of a rapidly swirling sorption liquid. Therefore, the problem of shutting down a process when a sorption amount is 1% to 5% can be prevented. This improves process and operation stability. In addition, the advantages allow the reactor to enable an increased polymerization production rate, reduced maintenance and operating costs, and an ability to switch between High Sorption Mode and Non-Sorption Mode.

On the other hand, when the inlet nozzle 30 forms an angle of 90° or more with the tangent of the plenum 10 at an intersection with the long axis of the inlet nozzle, it may not be able to generate a vortex phenomenon with sufficient force, and the washing phenomenon may not be sufficiently exhibited. When a distance (d) between a lowermost end of the dispersion plate and an uppermost end of the inlet nozzle is less than 100 mm, the flow of a fluid distributed to the dispersion plate may deteriorate. More specifically, in terms of achieving the above-described effects, an acute angle (θ) between the long axis of the inlet nozzle 30 and the tangent of the plenum 10 may be preferably 70° or less. In this range, a vortex phenomenon with sufficient force may be generated. At this time, a lower limit of the acute angle (θ) may be, for example, 10°, and preferably 30°. Additionally, the distance (d) between the lowermost end of the dispersion plate and the uppermost end of the inlet nozzle may be 100 to 500 mm, and even more preferably 100 to 300 mm. On the other hand, even in the case that the acute angle (θ) is less than 90° and a fluid flows into an oblique inlet line, when the distance (d) is less than 100 mm, a fluid sorbed and condensed on polymer particles in the plenum may not sufficiently sweep the plenum wall in its flow, and a dead zone may occur within the plenum. In addition, when the distance (d) is less than 100 mm, due to a channeling phenomenon, a fluid does not flow into the reactor in a uniformly distributed form through the dispersion plate. This may disrupt smooth heat exchange within the reactor. As a result, chunk creation and reduced production volume may occur, leading to process problems or process termination.

Hereinafter, the fluidized bed polymerization reactor according to one embodiment of the present disclosure will be described in more detail.

A fluidized bed reactor is a reactor in which solid particles behave similarly to a fluid. This behavior occurs by injecting gas and solids through the plenum 10, dispersion plate 20, and inlet nozzle 30 in a lower part of the reactor. As a result, solid particles are generated inside the reactor and become suspended. The inlet nozzle 30 is a device for injecting a fluid from the outside. The plenum 10 is a device that receives the fluid injected from the inlet nozzle 30. The dispersion plate 20 is a device for dispersing the injected gas.

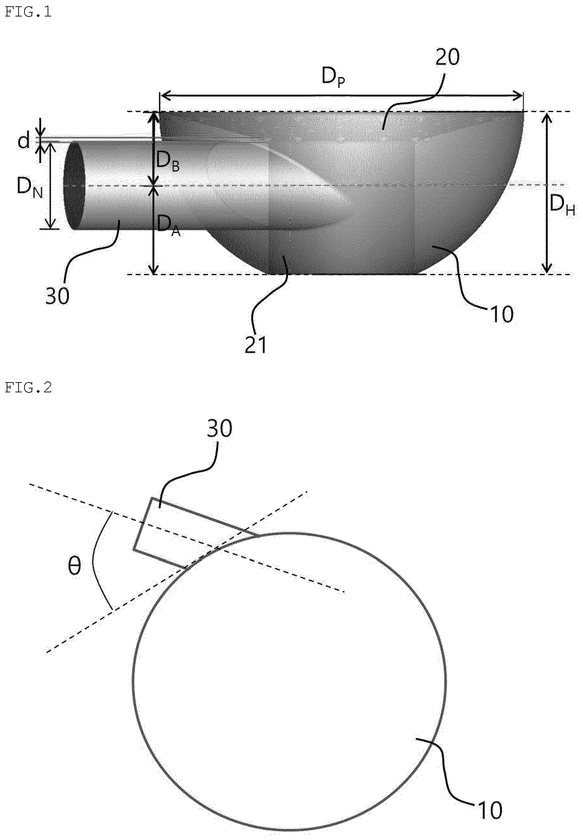

Figure 1 shows a side view of a fluidized bed polymerization reactor according to one embodiment of the present disclosure. Figure 2 shows a top view showing a long axis of an inlet nozzle of the fluidized bed polymerization reactor according to another embodiment of the present disclosure and an acute angle between the long axis of the inlet nozzle and a tangent of a plenum at an intersection with the long axis of the inlet nozzle. Referring to Figures 1 and 2, in the fluidized bed polymerization reactor according to a further embodiment of the present disclosure, the inlet nozzle 30 may be located at a predetermined angle on the outer surface of the plenum 10 to generate a vortex phenomenon when injecting a stream. In this way, by injecting the fluid through the inlet nozzle 30 twisted at a predetermined angle, a vortex phenomenon may occur when the fluid is injected. As described above, the acute angle (θ) between the long axis of the inlet nozzle 30 and the tangent of the plenum 10 at an intersection with the long axis of the inlet nozzle 30 may be less than 90°, and more preferably 70° or less. In this range, a vortex phenomenon with sufficient force may be generated. At this time, the lower limit of the acute angle (θ) may be, for example, 10°, and preferably 30°.

More specifically, the fluidized bed polymerization reactor according to a yet further embodiment of the present disclosure may have a D_{N}/D_{P} ratio (where the D_{N}/D_{P} ratio means a ratio of an inner diameter D_{N} (mm) of the inlet nozzle 30 to an inner diameter D_{P} (mm) of an upper part of the plenum 10) of 0.1 to 0.3, and more preferably 0.15 to 0.25. In addition, the plenum 10 may have a D_{H}/D_{P} ratio (where the D_{H}/D_{P} ratio means a ratio of a height D_{H} (mm) of the plenum 10 to an inner diameter D_{P} (mm) of the upper part of the plenum) of 0.4 to 0.6, and more preferably 0.45 to 0.55. In this range, the fluid may be dispersed more effectively.

As a more specific example, in the fluidized bed polymerization reactor according to a still yet further embodiment of the present disclosure, the inner diameter D_{P} of the upper part of the plenum 10 may be 3000 to 5000 mm, more preferably 3200 to 4800 mm, and even more preferably 3400 to 4500 mm. The inner diameter D_{N} of the inlet nozzle 30 may be 300 to 1000 mm, more preferably 400 to 950 mm, and even more preferably 500 to 900 mm.

Furthermore, as described above, in the fluidized bed polymerization reactor according to a still yet further embodiment of the present disclosure, the distance (d) between the lowermost end of the dispersion plate and the uppermost end of the inlet nozzle may be 100 mm or more, more specifically 100 to 500 mm, and more preferably 100 to 300 mm. In this range, the dispersion effect of the plenum 10 may be maximized. On the other hand, when the distance is less than 100 mm, a fluid sorbed and condensed on the polymer particles in the plenum may not sufficiently sweep the plenum wall in its flow, and a dead zone may occur within the plenum. In addition, due to a channeling phenomenon, a fluid does not flow into the reactor in a uniformly distributed form through the dispersion plate. As a result, reduced production volume and chunk creation may occur, leading to process problems or process termination.

In addition, the fluidized bed polymerization reactor according to a still yet further embodiment of the present disclosure may have a D_{A}/D_{P} ratio of 0.1 to 0.3, and more preferably 0.1 to 0.2, where the D_{A}/D_{P} ratio means a ratio of a distance D_{A} (mm) from the lowermost end of the plenum 10 to the long axis of the inlet nozzle 30 to the inner diameter D_{P} (mm) of the upper part of the plenum 10. Furthermore, a D_{A}/D_{B} ratio may be 0.8 to 1.2, and more preferably 0.9 to 1.1, where the D_{A}/D_{B} ratio means a ratio of a distance D_{A} (mm) from the lowermost end of the plenum to the long axis of the inlet nozzle to a distance D_{B} (mm) from the uppermost end of the dispersion plate to the long axis of the inlet nozzle. In this range, the fluid may be dispersed more effectively.

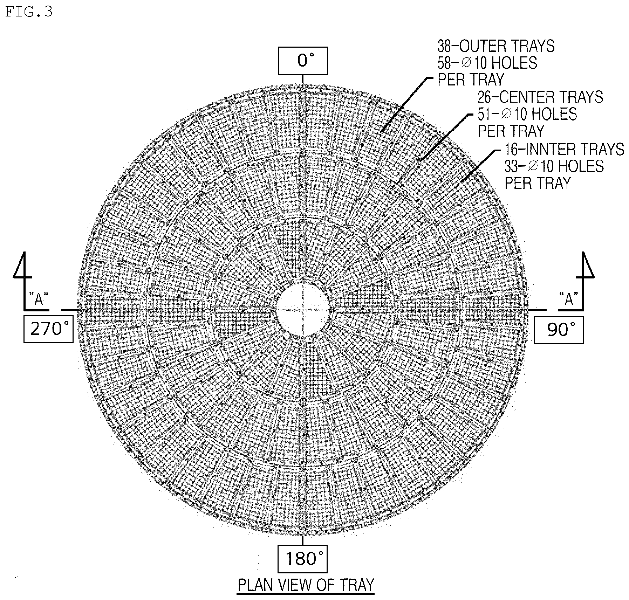

Additionally, referring to Figure 3, the fluidized bed polymerization reactor according to a still yet further embodiment of the present disclosure may be provided with a dispersion plate 20 to evenly distribute and transfer a fluid introduced into the plenum 10 to an upper portion. Such a dispersion plate 20 may have a funnel shape in which its upper part has the same diameter as an inner upper part of the plenum 10, and the diameter becomes smaller toward a lower end. As a specific example, an upper inclination of the dispersion plate 20 with the funnel-shaped structure may be 10° or more based on the upper part of the plenum 10. More preferably, the upper inclination may 10° to 60°, and even more preferably, from 20° to 50°. In addition, an inner diameter of a hollow center may be 200 to 600 mm, and more preferably 300 to 500 mm.

Additionally, the dispersion plate 20 may have a porous structure with a plurality of through holes. The through holes are holes penetrating one side to the other side of the dispersion plate 20, and may be used for a stream introduced from the inlet nozzle to pass. More specifically, the through holes may have a diameter of 10 to 100 mm, and more preferably 20 to 60 mm. The shape of the through holes is not particularly limited and may be, for example, circular, oval, or polygonal.

The dispersion plate 20 is made from a three-part annular tray and may be divided into an outer tray, a center tray, and an inner tray. Each tray is made up of a plurality of plates, and the plurality of plates may be arranged in an annular shape to have a funnel shape.

In a still yet further embodiment of the present disclosure, a discharge pipe 21 is for discharging polymerized polymer particles. The stream introduced through the inlet nozzle 30 is dispersed and introduced through the dispersion plate 20, and the polymer particles formed through polymerization in the reactor may be discharged through the discharge pipe 21. The size and shape of the discharge pipe may be arbitrarily adjusted by those skilled in the art, but specifically, for example, the shape may be a hollow cylindrical shape, and the size of the discharge pipe may be the same as that of the hollow center of the distribution plate 20 since the discharge pipe is required to be connected to the hollow center of the dispersion plate 20. As a more specific example, the inner diameter of the discharge pipe 21 may be 200 to 600 mm, and more preferably 300 to 500 mm.

Although the present disclosure has been described through the above specific details and limited drawings, these are provided only to facilitate a more general understanding of the present disclosure, and the present disclosure is not limited to the description and drawings. Those skilled in the art can make various modifications and variations from this description.

Therefore, the technical characteristics of the present disclosure should not be limited to the description and drawings, and all claims that are equivalent or equivalent to the scope of the patent claims as well as the later-described claims shall fall within the scope of the technical characteristics of the present disclosure.

## Claims

1. A fluidized bed polymerization reactor, comprising:
a plenum located in a lower part of a fluidized bed polymerization reactor;
a distribution plate located inside the plenum and having a hollow center;
a discharge pipe discharging polymer particles, as connected to the hollow center of the dispersion plate and having a hollow cylindrical structure; and
an inlet nozzle located on an outer surface of the plenum,
wherein the fluidized bed polymerization reactor is **characterized in that** an acute angle (θ) between a long axis of the inlet nozzle and a tangent of the plenum at an intersection with the long axis of the inlet nozzle is less than 90°, and a distance (d) between a lowermost end of the dispersion plate and an uppermost end of the inlet nozzle is 100 mm or more.

2. The reactor of Claim 1, wherein the fluidized bed polymerization reactor has a D_{N}/D_{P} ratio in a range of 0.1 to 0.3,
wherein the D_{N}/D_{P} ratio means a ratio of an inner diameter D_{N} (mm) of the inlet nozzle to an inner diameter D_{P} (mm) of an upper part of the plenum.

3. The reactor of Claim 1, wherein the fluidized bed polymerization reactor has a D_{A}/D_{B} ratio in a range of 0.8 to 1.2,
wherein the D_{A}/D_{B} ratio means a ratio of a distance D_{A} (mm) from a lowermost end of the plenum to the long axis of the inlet nozzle to a distance D_{B} (mm) from an uppermost end of the dispersion plate to the long axis of the inlet nozzle.

4. The reactor of Claim 1, wherein the fluidized bed polymerization reactor has a D_{A}/D_{P} ratio in a range of 0.1 to 0.3,
wherein the D_{A}/D_{P} ratio means a ratio of a distance D_{A} (mm) from a lowermost end of the plenum to the long axis of the inlet nozzle to an inner diameter D_{P} (mm) of an upper part of the plenum.

5. The reactor of Claim 1, wherein the dispersion plate has a porous structure provided with a plurality of through holes.

6. The reactor of Claim 1, wherein the dispersion plate has an inclination of 10° or more based on a horizontal axis of the plenum.

7. The reactor of Claim 1, wherein the plenum has a D_{H}/D_{P} ratio in a range of 0.4 to 0.6,
wherein the D_{H}/D_{P} ratio means a ratio of a height D_{H} (mm) of the plenum to an inner diameter D_{P} (mm) of an upper part of the plenum.

8. The reactor of Claim 1, wherein the acute angle (θ) is 70° or less.
